# EUROPÄISCHE PATENTSCHRIFT

(11) **EP 3 483 576 B1**
(45) Veröffentlichungstag und Bekanntmachung des Hinweises auf die Patenterteilung: **26.05.2021**
(21) Anmeldenummer: 18204231.7
(22) Anmeldetag: 05.11.2018
(51) Int. Cl.: G01L 1/22, B60G 17/019, G01G 1/00, G01B 7/16

(54) **VORRICHTUNG ZUR LASTERFASSUNG VON VORZUGSWEISE DRUCK-, ZUG- UND/ODER TORSIONSBELASTUNGEN AN EINEM NUTZFAHRZEUG-FAHRWERKSTEIL**
DEVICE FOR MEASURING LOADS, PREFERABLY TRACTION, PRESSURE AND/OR TORSION LOADS ACTING ON A COMMERCIAL VEHICLE RUNNING GEAR PART
DISPOSITIF DE DÉTECTION DE CHARGE, DE PRÉFÉRENCE DE CHARGES DE PRESSION, DE TRACTION ET / OU DE TORSION SUR UNE PARTIE DE CHÂSSIS DE VÉHICULE UTILITAIRE

(30) Priorität: 08.11.2017 DE 102017126135
(43) Veröffentlichungstag der Anmeldung: 15.05.2019
(73) Patentinhaber: BPW-Hungária Kft., 9700 Szombathely (HU)
(72) Erfinder: Andrási, Mátyás, 9700 Szombathely (HU); Finta, Zsolt, 9600 Sárvár (HU); Vozár, János, 9700 Szombathely (HU)
(74) Vertreter: Christophersen & Partner Partnerschaft mbB Patentanwälte

(56) Entgegenhaltungen:
- EP-A1- 2 402 729
- EP-A2- 1 785 636
- GB-A- 1 335 520
- US-A1- 2005 135 901
- US-B1- 9 404 823

## Beschreibung

Die Erfindung betrifft eine Vorrichtung zur Lasterfassung von vorzugsweise Druck-, Zug- und/oder Torsionsbelastungen an einem Nutzfahrzeug-Fahrwerksteil nach Patentanspruch 1.

Vorrichtungen mit diesen Merkmalen sind aus der US 4,102,031 bekannt. Zum Einsatz kommen sie an Fahrwerksteilen eines Nutzfahrzeugs, um Belastungszustände wie z.B. Druck- oder Zugbelastungen in dem Fahrwerksteil zu erfassen, und diese dem Fahrer in geeigneter Weise anzuzeigen.

An zweien im Abstand zueinander angeordneten Trägerfüßen in Gestalt von quaderförmigen Blöckchen sind jeweils eine Unterseite und eine Oberseite ausgebildet, wobei jeder Trägerfuß entlang seiner Unterseite mit dem Fahrwerksteil verschweißbar ist, und an seiner Oberseite mit einer Befestigungsfläche versehen ist. Diese dient der Abstützung eines eine Brücke zwischen den Trägerfüßen bildenden Sensorträgers. Der Sensorträger besteht es aus einem einzigen, also einem einheitlichen Stück Metall. Der Sensorträger trägt in einem zwischen den Trägerfüßen angeordneten Mittelabschnitt zwei Lastsensoren, von denen sich ein Sensor auf der Unterseite und der andere Sensor auf der Oberseite des Sensorträgers befindet. An seinen beiden Endabschnitten bildet der Sensorträger jeweils einen Befestigungsbereich. In diesem Befestigungsbereich ist der Sensorträger, unter der Anzugskraft einer Verschraubung, gegenüber der Befestigungsfläche des jeweiligen Trägerfußes abgestützt. Zwischen den so gegeneinander verspannten Flächen ist zusätzlich ein unter Druck verformbarer Kitt angeordnet. Zum Schutz gegen ungewünschte äußere Einflüsse ist die Baueinheit aus dem Sensorträger und den zwei Trägerfüßen von einer lösbar befestigten Schutzkappe umgeben.

Obwohl bei der Vorrichtung gemäß der US 4,102,031 die beiden Trägerfüße präzise an dem Fahrwerksteil positioniert und mit diesem verschweißt sind, kann es trotzdem zu Messungenauigkeiten kommen, da die Verbindung des langstreckten Sensorträgers mit den beiden Trägerfüßen nur durch jeweils eine Verschraubung erfolgt. Ist diese nicht ausreichend angezogen oder lockert sich die Verschraubung im Laufe der Zeit durch Erschütterungen des Fahrwerks, kann dies eine verringerte Messgenauigkeit zur Folge haben.

Aus der EP 2 402 729 A1 ist eine Drehmomenterfassungsvorrichtung bekannt, die insbesondere für Gelenkwellen zum Erfassen eines, über eine Drehachse, übertragenen Drehmoments eingerichtet ist. Die Drehmomenterfassungsvorrichtung umfasst einen sich in Richtung einer Längsachse erstreckenden Verformungskörper, wobei der Verformungskörper über ein erstes und zweites Abschlusselement an seinen Enden drehfest entlang der Drehachse angeordnet ist, wobei der Verformungskörper dazu eingerichtet ist, eine Relativbewegung, durch Verformung der Drehachse, der Abschlusselemente zueinander zu sensieren.

Weitere Druckschriften, die Vorrichtungen zur Sensierung von Lasten offenbaren, sind aus der US 2005/0135901 A1, aus der US 9,404,823 B1 sowie aus der GB 1 335 520 A bekannt.

Der Erfindung liegt die Aufgabe zugrunde, die bekannten Vorrichtungen zur Lasterfassung von z. B. Druck-, Zug- und/oder Torsionsbelastungen hinsichtlich der Messgenauigkeit sowie der längerfristigen Reproduzierbarkeit der Messergebnisse zu verbessern.

Zur Lösung dieser Aufgabe wird eine Vorrichtung für die Lasterfassung von Druck-, Zug- und/oder Torsionsbelastungen an einem Nutzfahrzeug-Fahrwerksteil mit den Merkmalen des Patentanspruchs 1 vorgeschlagen.

Bei dieser Vorrichtung ist der Befestigungsbereich, welcher sich an der Unterseite des Sensorträgers befindet, in unmittelbarem Kontakt gegen die Befestigungsfläche abgestützt, welche sich an der Oberseite des jeweiligen Trägerfußes befindet. Dabei ist entweder der Befestigungsbereich mit einer zahnartigen Oberflächenstruktur zum materialverdrängenden Eindringen in die gegenüberliegende Befestigungsfläche versehen, oder umgekehrt ist die Befestigungsfläche mit einer zahnartigen Oberflächenstruktur zum materialverdrängenden Eindringen in den gegenüberliegenden Befestigungsbereich versehen.

Erfindungsgemäß sind die Trägerfüße rotationssymmetrisch mit quer zu ihrer Unter- und Oberseite verlaufender Symmetrieachse gestaltet.

Ist der Befestigungsbereich mit der zahnartigen Oberflächenstruktur versehen, so sollte der Sensorträger in dem Befestigungsbereich ein Materialhärte aufweisen, die größer ist als die Materialhärte an der Oberseite des Trägerfußes, oder ist die Befestigungsfläche mit der zahnartigen Oberflächenstruktur versehen, so sollte der Trägerfuß an der Befestigungsfläche eine Materialhärte aufweisen, die größer ist als die Materialhärte des Sensorträgers.

Auf diese Weise ist sichergestellt, dass mit dem Anziehen der Verschraubung die zahnartigen Strukturen in das im Vergleich weichere und damit nachgiebige Material eindringen, und es so zu einem Formschluss im Mikrobereich kommt.

Ergebnis jeder dieser beiden Maßnahmen ist, dass sich die montierte Baueinheit bestehend aus dem Sensorträger und den beiden Trägerfüßen in sich soweit starr verhält, dass sich diese Eigenschaft auch dann nicht ändert, wenn die Vorrichtung, wie dies bei Fahrwerksteilen von Nutzfahrzeugen unvermeidlich ist, im Laufe der Zeit erheblichen Erschütterungen, Vibrationen etc. äußeren Einflüssen ausgesetzt ist.

Die Verschraubung umfasst vorzugsweise eine Schraube, die sich mit ihrem Schraubenkopf gegenüber der dem Befestigungsbereich abgewandten Oberseite des Sensorträgers abstützt, eine Durchgangsöffnung in dem Endabschnitt des Sensorträgers durchsetzt, und mit ihrem Gewindeabschnitt in eine Gewindebohrung in dem jeweiligen Trägerfuß eingreift. Mit dem Anziehen der Schraube werden Druckkräfte erzielt, die zu einem gegeneinander Pressen der Flächen und zu einem Eingraben der zahnartigen Oberflächenstruktur in die gegenüberliegende, vorzugsweise weichere Gegenfläche führen. Das Anziehen der Schraube lässt sich unter Vermeidung zu hoher Scherspannungen verbessern, indem zwischen dem Schraubenkopf und der Oberseite des Sensorträgers zusätzlich eine Unterlegscheibe angeordnet ist.

Zur Erzielung einer gleichmäßigen Druckverteilung an den in unmittelbarem Kontakt stehenden Flächen wird mit einer weiteren Ausgestaltung vorgeschlagen, dass sich das untere Ende der in dem jeweiligen Endabschnitt des Sensorträgers ausgebildeten Durchgangsöffnung ungefähr im Zentrum des Befestigungsbereiches befindet. Erzielt wird auf diese Weise ein gleichmäßig verteilter und verkantungsfreier Kontakt zwischen den gegeneinander gepressten Flächen.

Gemäß einer weiteren Ausgestaltung ist der Sensorträger zwischen dem den Lastsensor tragenden Mittelabschnitt und jedem der beiden Endabschnitte mit jeweils einem Schlitz versehen, der sich im Wesentlichen quer zur Längserstreckung des Sensorträgers über eine Schlitzlänge erstreckt, die größer als die halbe Breite des Sensorträgers ist. Bevorzugt ist hierbei eine Ausgestaltung, bei der sich die beiden Schlitze in einander entgegengesetzte Richtungen erstrecken.

Für einen Schutz gegen äußere Einwirkungen und Einflüsse ist von Vorteil, wenn der Sensorträger und die Trägerfüße von einem lösbar befestigbaren Schutzgehäuse umgeben sind. Vorzugsweise ist das Schutzgehäuse in Längsrichtung des Sensorträgers weder gegenüber dem Sensorträger noch gegenüber dem ersten und zugleich dem zweiten Trägerfuß abgestützt. Auf diese Weise kann weder das Schutzgehäuse, noch seine Befestigung in irgendeiner Weise den Sensorträger und damit den Lastsensor beeinflussen. Wäre hingegen zur Befestigung des Schutzgehäuses eine Abstützung entweder an dem Sensorträger oder an zugleich beiden Trägerfüßen vorhanden, könnte dies die Genauigkeit der durch den Lastsensor erfassten Messwerte negativ beeinflussen.

Um derartige, negative Einflüsse im vornhinein auszuschalten, ist vorzugsweise das Schutzgehäuse ausschließlich an Beschlägen befestigt, die ihrerseits direkt, nämlich ohne einen Kontakt zu dem Sensorträger und zu den Trägerfüßen, mit dem Fahrwerksteil verbindbar sind.

Nachteilig bei der bekannten Vorrichtung gemäß der US 4,102,031 ist auch, dass die dort vorgesehene Schutzkappe mittels zweier Schrauben an den Trägerfüßen befestigt ist, wodurch es zu einer Beeinflussung der Genauigkeit der durch den Lastsensor erfassten Messwerte kommen kann.

Es wird weiterhin offenbart aber nicht beansprucht, die bekannte Vorrichtung zur Lasterfassung von z.B. Druck-, Zug-, und/oder Torsionsbelastungen so weiter zu entwickeln, dass die Vorrichtung nicht nur geschützt ist gegen äußere, nicht unmittelbar aus dem zu sensierenden Fahrwerksteil hier rührende Einflüsse, sondern dieser Schutz in der Weise ausgebildet ist, dass die Genauigkeit der durch den Lastsensor erfassten Messwerte nicht negativ beeinflusst wird.

Bei dieser Vorrichtung sind der Sensorträger und die Trägerfüße von einem lösbar befestigbaren Schutzgehäuse umgeben, welches in Längsrichtung des Sensorträgers weder gegenüber dem Sensorträger, noch zugleich gegenüber dem ersten sowie dem zweiten Trägerfuß abgestützt ist.

Weitere Einzelheiten und Vorteile der Erfindung ergeben sich aus der nachfolgenden Beschreibung der zugehörigen Zeichnungen, in denen ein Ausführungsbeispiel einer erfindungsgemäßen Vorrichtung wiedergegeben ist. In den Zeichnungen zeigen:
- Fig. 1: in einer Explosionsdarstellung eine Ausführungsform der Vorrichtung in noch nicht montiertem Zustand;
- Fig. 2: einen der Trägerfüße der Vorrichtung;

- Fig. 3: eine Ansicht von unten auf den Sensorhalter der Vorrichtung, auch in einer Detailwiedergabe.

Die im Folgenden anhand der Zeichnungen beschriebene Vorrichtung ist dazu bestimmt, Druck-, Zug- und/oder Torsionslasten an einem Fahrwerksteil eines Nutzfahrzeuges zu erfassen, und z.B. dem Fahrer des Nutzfahrzeuges in geeigneter Weise anzuzeigen. Zu letzterem kann z.B. in der Fahrerkabine des Nutzfahrzeuges eine entsprechende optische oder akustische Anzeige vorhanden sein. Anwendungsmöglichkeiten der Vorrichtung sind z.B. in der US 4,102,031 beschrieben, dort im Hinblick auf den Einsatz solcher Vorrichtung an einem motorgetriebenen Nutzfahrzeug mit vorderen und hinteren Starrachsen. Zum Beispiel kann die Vorrichtung dazu dienen, Biegezustände an einem starren Nutzfahrzeug-Achskörper oder an einem Achslenker zu erfassen.

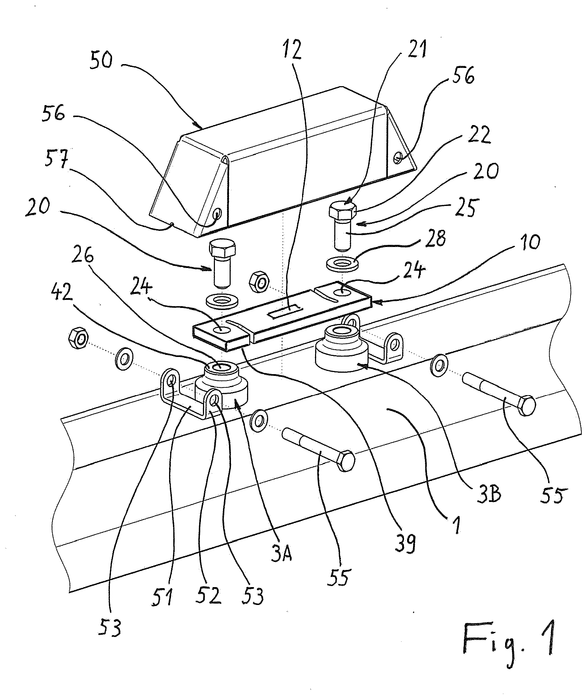

In Figur 1 ist, für die noch nicht montierte Vorrichtung, mit dem Bezugszeichen 1 ein Fahrwerksteil eines Nutzfahrzeuges wiedergegeben, an welchem Fahrwerksteil die darin im Fahrzeugstand herrschenden Belastungen festgestellt werden sollen. Diese Belastungen können z.B. die Biege- oder Torsionsbelastungen in dem Fahrwerksteil 1 sein. Ist dieses Fahrwerksteil z.B. ein starrer Achskörper des Nutzfahrzeugs, führt eine Biegung des Achskörpers 1 zu unterschiedlichen Lastzuständen an der Ober- und an der Unterseite, z.B. zu einer Druckbelastung an der Oberseite, und einer Zugbelastung an der Unterseite des Achskörpers. Diese Lastzustände und ggf. auch Torsionslasten die der Achskörper um seine Längsachse erfährt, werden mittels der hier beschriebenen Vorrichtung sensiert. Dazu ist die Vorrichtung an dem Fahrwerksteil 1 befestigt, wobei die Befestigung vorzugsweise an der Oberseite des Fahrwerksteils 1 erfolgt, jedoch abhängig vom Einsatzzweck auch eine Befestigung an der Unterseite, an der Vorder- oder Rückseite denkbar ist. Außerdem lässt sich die Vorrichtung auch an anderen Fahrwerksteilen verwenden, z.B. an Quer- oder Längslenkern des Nutzfahrzeug-Fahrwerks.

Gemäß Figur 1 an der Oberseite des Fahrwerksteil 1 ein erster Trägerfuß 3A und ein zweiter Trägerfuß 3B befestigt, in dem die beiden Trägerfüße 3A, 3B entlang ihres kreisförmigen Umfangs mit der Außenseite des Fahrwerksteils 1 verschweißt sind.

Zwar ist jeder Trägerfuß 3A, 3B mit dem Fahrwerksteil verschweißt, jedoch sind die Trägerfüße 3A, 3B untereinander ohne Kontakt, indem sie einen ausreichend großen Abstand zueinander aufweisen. Dieser Abstand beeinflusst das Messergebnis, da Verformungen des Fahrwerksteils 1 dazu führen, dass sich die Positionen der Trägerfüße 3A, 3B zueinander geringfügig ändern. Diese Positionsveränderung wird (mittelbar) mit der hier beschriebenen Vorrichtung messtechnisch erfasst, und daraus das Verformungsverhalten des Fahrwerksteils 1 errechnet.

Ein in Richtung der Längserstreckung des Fahrwerksteils 1 langgestreckter Sensorträger 10 ist auf beide Trägerfüße 3A, 3B zugleich aufgesetzt, und an diesen starr befestigt. Der hier als langgestreckter Rechteckquader ausgebildete Sensorträger 10 erstreckt sich dabei parallel und im Abstand zu der Außenseite des Fahrwerksteils 1.

Der Sensorträger 10 besteht aus einem einheitlichen Stück Metall. In einem Mittelabschnitt 11, der sich zwischen den Trägerfüßen 3A, 3B befindet, trägt der Sensorträger 10 mindestens einen Lastsensor 12. Der Lastsensor 12 ist dazu geeignet, die Verformung des Sensorträgers 10 zu erfassen und daraus Druck-, Zug- und/oder Torsionszustände messtechnisch zu erfassen. Aus diesen Werten lassen sich rechentechnisch die Verformungszustände des Fahrwerksteils 1 ermitteln.

Der Lastsensor 12 kann zu diesem Zweck z.B. in den starren Sensorträger 10 eingebettet sein. Alternativ besteht die Möglichkeit, den Lastsensor 12 aufzuteilen in z.B. einen ersten Dehnungssensor auf der Oberseite, und einen zweiten Dehnungssensor auf der Unterseite des Sensorträgers. Für eine optimale Messwerterfassung ist es von Vorteil, wenn sich der mindestens eine Lastsensor 12 in der Mitte der Gesamtlänge des Sensorträgers 10 befindet.

Der Sensorträger 10 hat hier die Gestalt einer quaderförmigen Leiste und setzt sich einstöckig neben dem Mittelabschnitt 11 aus einem ersten Endabschnitt 14A und einem zweiten Endabschnitt 14B zusammen. Die Endabschnitte 14A, 14B bilden die Verbindung zu den Trägerfüßen 3A, 3B, indem der Sensorträger 10 auf seinem ersten Endabschnitt 14A mit der Oberseite 42 des ersten Trägerfußes 3A, und auf seinem zweiten Endabschnitt 14B mit der Oberseite 42 des zweiten Trägerfußes 3B verbunden ist.

Die Verbindung des ersten Endabschnitts 14A mit dem ersten Trägerfuß 3A, und des zweiten Endabschnitts 14B mit dem zweiten Trägerfuß 3B erfolgt mittels jeweils einer Verschraubung 20. Die Verschraubung 20 umfasst eine Schraube 21, die sich mit ihrem Schraubenkopf 22 an der Oberseite des Sensorträgers 10 abstützt, eine Durchgangsöffnung 24 in dem jeweiligen Endabschnitt 14A, 14B durchsetzt, und mit ihrem Gewindeabschnitt 25 in eine Gewindebohrung 26 in dem jeweiligen Trägerfuß 3A, 3B eingreift. Der Schraubenkopf 22 stützt sich vorzugsweise nicht unmittelbar auf der Außenseite des Sensorträgers 10 ab, vielmehr ist zwischen Schraubenkopf und dieser Außenseite noch eine Unterlegscheibe 28 angeordnet.

Der Sensorträger 10 ist zwischen dem den eigentlichen Lastsensor 12 aufweisenden Mittelabschnitt 11 und jedem der beiden Endabschnitte 14A, 14B mit jeweils einem Schlitz 31A, 31B versehen. Jeder der Schlitze 31A, 31B erstreckt sich im Wesentlichen quer zur Längserstreckung des Sensorträgers 10 über eine Schlitzlänge L, die größer ist als die Hälfte der Breite B des Sensorträgers.

Die beiden Schlitze 31A, 31B erstrecken sich in einander entgegengesetzte Richtungen. Auf diese Weise ist dem Sensorträger 10 in den Schlitzbereichen eine kontrollierte Verformung möglich, um so eine ungewollte bleibende Verformung des gesamten Sensorträgers 10 zu vermeiden, die auch den Lastsensor 12 schädigen könnte.

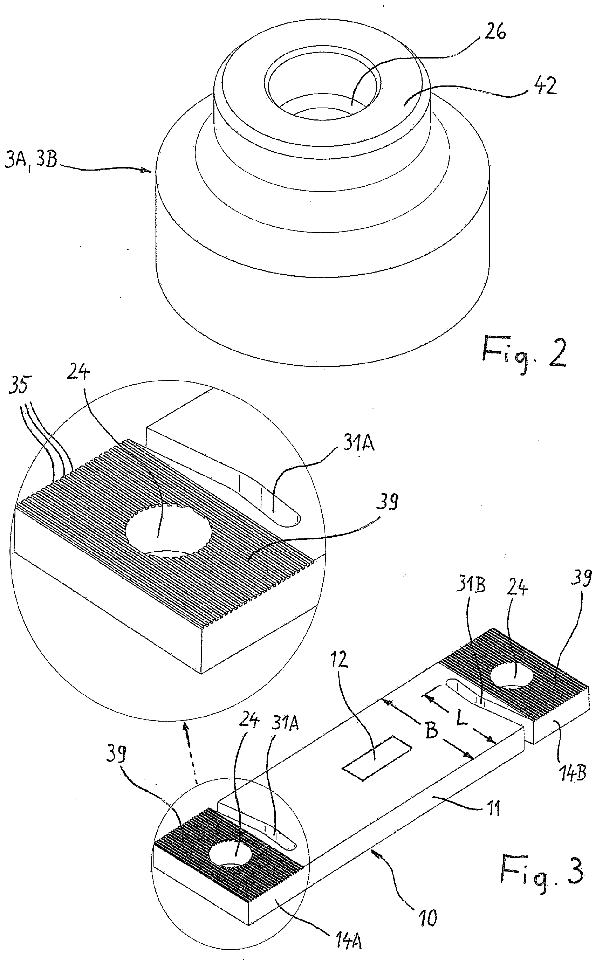

Gemäß Figur 3 ist der Sensorträger 10 an seinen zwei Endabschnitten 14A, 14B dort, wo sich der Sensorträger auf der Oberseite 42 des Trägerfußes 3A, 3B abstützt, um die Durchgangsöffnung 24 herum mit einer zahnartigen Oberflächenstruktur 35 versehen. Die zahnartige Oberflächenstruktur 35 beschränkt sich jeweils auf einen Befestigungsbereich 39 an der Unterseite der Endabschnitte rund um die Durchgangsöffnung 24.

Die Struktur 35 ist z.B. durch eine Bearbeitung des Befestigungsbereichs 39 mittels eines energiereichen Laserstrahls hergestellt. Durch die Energie des Laserstrahls wirft das Material des z. B. aus Stahlguss bestehenden Sensorträgers 10 auf, wobei sich Zähne und zwischen den Zähnen Täler bilden. Zugleich tritt eine Härtung der oberflächennahen Materialbereiche auf, wodurch der bearbeitete Befestigungsbereich 39 eine höhere Härte aufweist, als die gegenüberliegende, durch die Oberseite des jeweiligen Trägerfußes 3A, 3B gebildete Befestigungsfläche 42. Auf diese Weise dringen beim Anziehen der Verschraubung 20 die Zähne der Oberflächenstrukturen 35 in das im Vergleich weichere und damit nachgiebigere Material des Trägerfußes 3A, 3B ein, und es kommt zwischen dem Sensorträger 10 und jedem Trägerfuß 3A, 3B im Mikrobereich zu einem Formschluss. Ergebnis dieser Maßnahme ist, dass sich die Baueinheit bestehend aus dem Sensorträger 10 und den beiden Trägerfüßen 3A, 3B in sich soweit starr verhält, dass sich diese Eigenschaft auch dann nicht ändert, wenn die Vorrichtung, wie dies bei Fahrwerksteilen von Nutzfahrzeugen unvermeidlich ist, im Laufe der Zeit erheblichen Erschütterungen, Vibrationen etc. äußeren Einflüssen ausgesetzt ist.

Für eine preiswerte Herstellung der beiden Trägerfüße 3A, 3B sind diese jeweils rotationssymmetrisch gestaltet mit quer zu Ihrer Unter- und Oberseite verlaufender Symmetrieachse. Dabei ist die Fläche der Unterseite der Trägerfüße 3A, 3B, entlang der das Verschweißen mit der Außenseite des Fahrwerksteils 1 erfolgt, größer als die als Befestigungsfläche 42 für den Sensorhalter 10 dienende Oberseite. Dies wird erreicht, indem jeder Trägerfuß 3A, 3B sich zu dem Sensorträger 10 hin verjüngt.

Zum Schutz gegen äußere Einflüsse sind der Sensorträger 10 und die Trägerfüße 3A, 3B von einem lösbar befestigbaren Schutzgehäuse 50 umgeben. Um jede Beeinflussung des Messergebnisses des Lastsensors 12 zu vermeiden, ist das Schutzgehäuse 50 in Längsrichtung des Sensorträgers 10 weder gegenüber dem Sensorträger 10 selbst abgestützt, noch gleichzeitig gegenüber dem ersten Trägerfuß 3A und dem zweiten Trägerfuß 3B. Insbesondere erfolgt die Festlegung des Schutzgehäuses 50 an keinem dieser Teile, sondern ausschließlich an dem Fahrwerksteil 1.

Hierzu sind, außerhalb der Trägerfüße 3A, 3B, zwei als Beschläge 51 dienende Befestigungsschellen außen direkt an dem Fahrwerksteil 1 befestigt. Jeder Beschlag 51 weist einstückig zwei zueinander parallele Laschen 52 auf, die mit zueinander fluchtenden Öffnungen 53 versehen sind. Jeweils eine Schraube 55 ist durch zwei zueinander fluchtende Öffnungen 56 in dem Schutzgehäuse 50 und durch die zwei zueinander fluchtenden Öffnungen 53 der Schelle 51 hindurchgeführt, und führt zur Festlegung des Schutzgehäuses 50 an den beiden Befestigungsschellen 51.

Vorzugsweise ist das Schutzgehäuse 50 an fünf Seiten geschlossen und weist nur zur Außenseite des Fahrwerksteils 1 hin eine Öffnung auf. Mit Aufsetzen des Schutzgehäuses 50 auf das Fahrwerksteil 1 entfällt auch diese Öffnung, so dass das Schutzgehäuse 50 dann in Verbindung mit der Außenseite des Fahrwerksteils 1 eine allseitige Abdeckung bietet.

Das Schutzgehäuse 50 besteht z.B. aus Kunststoff und bietet Platz für die dahinter angeordneten Einzelteile der Vorrichtung. Ein elektrisches Signalkabel des Lastsensors 12 ist an geeigneter Stelle aus dem Schutzgehäuse 50 herausgeführt. Hierzu kann das Schutzgehäuse 50 in seiner einen Stirnfläche mit einer kleinen Ausnehmung 57 für das elektrische Signalkabel versehen sein.

### Bezugszeichenliste

- 1: Fahrwerksteil, Achskörper
- 3A: Trägerfuß
- 3B: Trägerfuß
- 10: Sensorträger
- 11: Mittelabschnitt
- 12: Lastsensor
- 14A: Endabschnitt
- 14B: Endabschnitt
- 20: Verschraubung
- 21: Schraube
- 22: Schraubenkopf
- 24: Durchgangsöffnung
- 25: Gewindeabschnitt
- 26: Gewindebohrung
- 28: Unterlegscheibe
- 31A: Schlitz
- 31B: Schlitz
- 35: zahnartige Oberflächenstruktur
- 39: Befestigungsbereich
- 42: Befestigungsfläche
- 50: Schutzgehäuse
- 51: Beschlag, Befestigungsschelle
- 52: Lasche
- 53: Öffnung
- 55: Schraube
- 56: Öffnung
- 57: Ausnehmung für Signalkabel

- B: Breite
- L: Schlitzlänge

## Patentansprüche

1. Vorrichtung zur Lasterfassung von vorzugsweise Druck-, Zug- und/oder Torsionsbelastungen an einem Nutzfahrzeug-Fahrwerksteil, mit zwei im Abstand zueinander angeordneten Trägerfüßen (3A, 3B), an denen jeweils eine Unterseite und eine Oberseite ausgebildet ist, wobei jeder Trägerfuß (3A, 3B) entlang der Unterseite mit dem Fahrwerksteil verschweißbar ist und an der Oberseite mit einer Befestigungsfläche (42) zur Abstützung eines eine Brücke zwischen den Trägerfüßen (3A, 3B) bildenden Sensorträgers (10) versehen ist, wobei die Trägerfüße (3A, 3B) rotationssymmetrisch mit quer zu ihrer Unter- und Oberseite verlaufender Symmetrieachse gestaltet sind, wobei der Sensorträger (10) aus einem einheitlichen Stück Material besteht, in einem zwischen den Trägerfüßen angeordneten Mittelabschnitt (11) einen Lastsensor (12) trägt, und an jedem seiner beiden Endabschnitte (14A, 14B) einen Befestigungsbereich (39) bildet, in dem der Sensorträger (10) gegen die Befestigungsfläche (42) des jeweiligen Trägerfußes (3A, 3B) unter der Anzugskraft einer Verschraubung (20) abgestützt ist, wobei der Befestigungsbereich (39) in unmittelbarem Kontakt gegen die Befestigungsfläche (42) abgestützt ist, und der Befestigungsbereich (39) oder die Befestigungsfläche (42) mit einer zahnartigen Oberflächenstruktur (35) zum materialverdrängenden Eindringen in die gegenüberliegende Befestigungsfläche (42) bzw. in den gegenüberliegenden Befestigungsbereich (39) versehen ist, wobei
- nur der Befestigungsbereich (39) mit der zahnartigen Oberflächenstruktur (35) versehen ist, und dass der Sensorträger (10) in dem Befestigungsbereich (39) eine Materialhärte aufweist, die größer ist als die Materialhärte des Trägerfußes (3A, 3B);
oder
- nur die Befestigungsfläche (42) mit der zahnartigen Oberflächenstruktur (35) versehen ist, und dass der Trägerfuß (3A, 3B) an der Befestigungsfläche (42) eine Materialhärte aufweist, die größer ist als die Materialhärte des Sensorträgers (10).

2. Vorrichtung nach Anspruch 1 **dadurch gekennzeichnet, dass** die Verschraubung (20) eine Schraube (21) umfasst, die sich mit ihrem Schraubenkopf (22) gegenüber der dem Befestigungsbereich (39) abgewandten Oberseite des Sensorträgers (10) abstützt, eine Durchgangsöffnung (24) in dem Endabschnitt (14A, 14B) durchsetzt und mit ihrem Gewindeabschnitt (25) in eine Gewindebohrung (26) in dem jeweiligen Trägerfuß (3A, 3B) eingreift.

3. Vorrichtung nach Anspruch 2, **gekennzeichnet durch** eine zwischen dem Schraubenkopf (22) und der Oberseite des Sensorträgers (10) angeordnete Unterlegscheibe (28).

4. Vorrichtung nach Anspruch 2 oder 3 **dadurch gekennzeichnet, dass** sich das untere Ende der Durchgangsöffnung (24) im Zentrum des Befestigungsbereiches (39) befindet.

5. Vorrichtung nach einem der vorangehenden Ansprüche **dadurch gekennzeichnet, dass** der Sensorträger (10) zwischen dem den Lastsensor (12) tragenden Mittelabschnitt (11) und jedem der beiden Endabschnitte (14A, 14B) mit jeweils einem Schlitz (31A, 31B) versehen ist, der sich im Wesentlichen quer zur Längserstreckung des Sensorträgers (10) über eine Schlitzlänge (L) erstreckt, die größer als die halbe Breite des Sensorträgers (10) ist.

6. Vorrichtung nach Anspruch 5, **dadurch gekennzeichnet, dass** sich die beiden Schlitze (31A, 31B) in einander entgegengesetzte Richtungen erstrecken.

## Claims

1. Apparatus for load detection of preferably compressive, tensile and/or torsional loads on a utility vehicle chassis part, with two carrier feet (3A, 3B) which are arranged at a spacing from one another and on which in each case a lower side and an upper side are configured, it being possible for each carrier foot (3A, 3B) to be welded along the lower side to the chassis part, and each carrier foot (3A, 3B) being provided on the upper side with a fastening face (42) for the support of a sensor carrier (10) which forms a bridge between the carrier feet (3A, 3B), the carrier feet (3A, 3B) being of rotationally symmetrical design with an axis of symmetry which runs transversely with respect to their lower side and upper side, the sensor carrier (10) consisting of a single piece of material, carries a load sensor (12) in a central section (11) which is arranged between the carrier feet, and forms a fastening region (39) on each of its two end sections (14A, 14B), in which fastening region (39) the sensor carrier (10) is supported against the fastening face (42) of the respective carrier foot (3A, 3B) under the tightening force of a screw connection (20), the fastening region (39) being supported in direct contact against the fastening face (42), and the fastening region (39) or the fastening face (42) being provided with a tooth-like surface structure (35) for the material-displacing penetration into the opposite fastening face (42) or into the opposite fastening region (39),
- only the fastening region (39) being provided with the tooth-like surface structure (35), and the sensor carrier (10) having a material hardness in the fastening region (39), which material hardness is greater than the material hardness of the carrier foot (3A, 3B);
or
- only the fastening face (42) being provided with the tooth-like surface structure (35), and the carrier foot (3A, 3B) having a material hardness on the fastening face (42), which material hardness is greater than the material hardness of the sensor carrier (10).

2. Apparatus according to Claim 1, **characterized in that** the screw connection (20) comprises a screw (21) which is supported with its screw head (22) with respect to the upper side of the sensor carrier (10), which upper side faces away from the fastening region (39), which screw (21) penetrates a through opening (24) in the end section (14A, 14B) and engages with its threaded section (25) into a threaded bore (26) in the respective carrier foot (3A, 3B).

3. Apparatus according to Claim 2, **characterized by** a washer (28) which is arranged between the screw head (22) and the upper side of the sensor carrier (10).

4. Apparatus according to Claim 2 or 3, **characterized in that** the lower end of the through opening (24) is situated in the centre of the fastening region (39).

5. Apparatus according to one of the preceding claims, **characterized in that**, between the centre section (11) which carries the load sensor (12) and each of the two end sections (14A, 14B), the sensor carrier (10) is provided with in each case one slot (31A, 31B) which extends substantially transversely with respect to the longitudinal extent of the sensor carrier (10) over a slot length (L) which is greater than half the width of the sensor carrier (10).

6. Apparatus according to Claim 5, **characterized in that** the two slots (31A, 31B) extend in opposite directions with respect to one another.

## Revendications

1. Dispositif de détection de charge, de préférence de charges de pression, de traction et/ou de torsion, sur une partie de châssis de véhicule utilitaire, comprenant deux embases de support (3A, 3B) disposées à distance l'une de l'autre, sur lesquelles respectivement une face inférieure et une face supérieure sont réalisées, dans lequel chaque embase de support (3A, 3B) peut être soudée à la partie de châssis le long de la face inférieure, et est munie sur la face supérieure d'une surface de fixation (42) pour soutenir un support de capteur (10) formant un pont entre les embases de support (3A, 3B), les embases de support (3A, 3B) étant configurées à symétrie de révolution avec un axe de symétrie s'étendant transversalement à leur face inférieure et à leur face supérieure, dans lequel le support de capteur (10) est composé d'une pièce unitaire de matière, porte un capteur de charge (12) dans une partie centrale (11) disposée entre les embases de support, et forme à chacune de ses deux parties d'extrémité (14A, 14B) une zone de fixation (39) dans laquelle le support de capteur (10) est soutenu contre la surface de fixation (42) de l'embase de support (3A, 3B) respective sous l'effet de la force de serrage d'un vissage (20), dans lequel la zone de fixation (39) est soutenue en contact direct contre la surface de fixation (42), et la zone de fixation (39) ou la surface de fixation (42) est munie d'une structure de surface dentée (35) pour pénétrer dans la surface de fixation opposée (42) ou dans la zone de fixation opposée (39) par refoulement de matière, dans lequel
- seule la zone de fixation (39) est munie de la structure de surface dentée (35), et le support de capteur (10) présente dans la zone de fixation (39) une dureté de matière qui est supérieure à la dureté de matière de l'embase de support (3A, 3B) ;
ou
- seule la surface de fixation (42) est munie de la structure de surface dentée (35), et l'embase de support (3A, 3B) présente sur la surface de fixation (42) une dureté de matière qui est supérieure à la dureté de matière du support de capteur (10).

2. Dispositif selon la revendication 1, **caractérisé en ce que** le vissage (20) comprend une vis (21) qui prend appui par sa tête de vis (22) à l'opposé de la surface supérieure du support de capteur (10), détournée de la zone de fixation (39), traverse une ouverture de passage (24) dans la partie d'extrémité (14A, 14B) et s'engage par sa partie filetée (25) dans un taraudage (26) dans l'embase de support (3A, 3B) respective.

3. Dispositif selon la revendication 2, **caractérisé par** une rondelle (28) disposée entre la tête de vis (22) et la surface supérieure du support de capteur (10) .

4. Dispositif selon la revendication 2 ou 3, **caractérisé en ce que** l'extrémité inférieure de l'ouverture de passage (24) se trouve au centre de la zone de fixation (39).

5. Dispositif selon l'une quelconque des revendications précédentes, **caractérisé en ce que** le support de capteur (10) est muni entre la partie centrale (11) portant le capteur de charge (12) et chacune des deux parties d'extrémité (14A, 14B) respectivement d'une encoche (31A, 31B) qui s'étend de manière substantiellement transversale à l'extension longitudinale du support de capteur (10) sur une longueur d'encoche (L) qui est supérieure à la moitié de la largeur du support de capteur (10).

6. Dispositif selon la revendication 5, **caractérisé en ce que** les deux encoches (31A, 31B) s'étendent dans des directions mutuellement opposées.
